# EUROPEAN PATENT SPECIFICATION

(11) **EP 2 934 781 B1**
(45) Date of publication and mention of the grant of the patent: **16.11.2016**
(21) Application number: 13811432.7
(22) Date of filing: 17.12.2013
(51) Int. Cl.: B21D 5/08, A47B 96/14, E04B 1/24

(54) **METHOD FOR THE MANUFACTURE OF A DUAL GUIDE RAIL AND A GUIDE RAIL MANUFACTURED ACCORDING TO THE METHOD**
VERFAHREN ZUR HERSTELLUNG EINER DOPPELTEN FÜHRUNGSSCHIENE UND NACH DEM VERFAHREN HERGESTELLTE DOPPELTE FÜHRUNGSSCHIENE
PROCÉDÉ DE FABRICATION D'UN DOUBLE RAIL DE GUIDAGE ET DOUBLE RAIL DE GUIDAGE FABRIQUÉ SELON LE PROCÉDÉ

(30) Priority: 20.12.2012 SE 1251472
(43) Date of publication of application: 28.10.2015
(73) Proprietor: Schneider Electric Industries SAS, 92500 Rueil-Malmaison (FR)
(72) Inventor: ÖJERSTAV, Jan, S-792 34 Mora (SE)
(74) Representative: Groth & Co. KB
(86) International application number: PCT/EP2013/076801
(87) International publication number: WO 2014/095783

(56) References cited:
- EP-A2- 0 151 902
- EP-A2- 2 140 952
- WO-A1-2006/045491
- WO-A1-2008/030028
- DE-A1- 4 104 234
- GB-A- 1 503 588
- GB-A- 2 164 966

## Description

### Technical Field

The present invention relates to a method for the manufacture of guide rails or hanger rails of dual design in the form of profiles that have a symmetrical cross-section. Said hanger rails/guide rails are primarily intended for the mounting of cable ladders, cable trays, or wire trays for electrical cabling, water pipes, central heating, ventilation ducts, etc., above all on factory premises.

### Background of the Invention

The background of the invention is the need of mounting cable ladders, cable trays, or wire trays for electrical cabling by means of hanger rails or guide rails, above all on factory premises. Previously, such hanger rails/guide rails have been manufactured in single design, as in for example DE 41 04 234 A1, the webs of the rails having been used to anchor the rails in walls, floors, or ceilings. Furthermore, said hanger rails/guide rails have in single design also been combined with a hanger rail/guide rail of the same kind in single design to provide a dual rail, which can be used for mounting on both sides. For such dual mounting, identical single rails were used, which were combined either web to web or by welded or bolted elements between each rail.

It is true that these production methods for dual rails provided stiff constructions but at a time and laborious effort that thereby becomes expensive in the long run.

### The Object of the Invention

The object of the invention is to achieve a method for the manufacture of a dual guide rail/hanger rail as well as such a rail manufactured according to the method.

The object is furthermore to improve current manufacturing methods as regards both time-consumption and economy.

In addition, the object is to be possible to present a method of manufacture that is easily adaptable between different dimensions of a hanger rail/guide rail of dual design.

### Summary of the Invention

By the present invention, as the same appears in the independent claims, the above-mentioned objects are met, said disadvantages having been eliminated. Suitable embodiments of the invention are defined in the dependent claims.

The invention concerns a method for the manufacture of a dual guide rail comprising a first attachment area and a second attachment area, each of which two attachment areas is formed with a cross-section of C-shape. Each attachment area comprises a rear portion, two side portions, each of which is provided with a front portion having a gripping edge facing the rear portion. The two rear portions of the two attachment areas are facing each other and the two rear portions are interconnected by a web. The method has the following manufacturing steps:
a) a profile billet is roll-formed to comprise the web centrally situated between and integrated with the rear portion;
b) by roll forming, there are also created first and second rear portion parts, which flank said web;
c) by roll forming, the side portions of one side of the two attachment areas are also created fixedly connected to the respective rear portion part;
d) by roll forming, the front portion parts of one side of the attachment areas are also created;
e) by roll forming, the gripping edges facing inward of one side of the attachment areas are furthermore created;
the profile half formed by said manufacturing steps is joined to a corresponding profile half, web to web, into a complete guide rail with the rear portions interconnected by the combined web.

In one embodiment of the method, the profile billet has been perforated centrally to form through holes in the web. This implies on one hand an option to mounting also in these holes but also a weight reduction of the entire dual profile, i.e., the guide rail.

In one embodiment of the method, the roll forming takes place in three roll forming portions, each one of which comprises a bottom roller and a top roller between which rollers the profile part billet is roll-formed.

In one embodiment of the method, each roller, before the roll forming, is assembled from at least two roller parts to adapt the length of a spacing in the profile part. This spacing may be considered to be a combined web for the dual profile and contributes to the bending stiffness of the dual profile.

The invention furthermore concerns a dual guide rail, i.e., dual profile, comprising a first attachment area and a second attachment area, each of which two attachment areas is formed with a cross-section of C-shape comprising a rear portion, two side portions, each of which is provided with a front portion having a gripping edge facing the rear portion. The two rear portions of the two attachment areas are facing each other and the two rear portions are interconnected by a web. Said guide rail consists of a first profile half and a second profile half where each profile half comprises two half rear portions, which are interconnected by said web.

In one embodiment of the device, the first profile half and the second profile half are joined to each other by the respective web being assembled to form a uniform web of the dual guide rail. The joining of the profile halves is usually made by welding, but also riveting, roll forming, gluing, clinching, etc., are possible joining methods.

In one embodiment of the device, the web of each profile half is essentially flat and formed with through holes. As indicated above, said through holes aim at increasing the mounting variants of the dual profile but also at saving weight to facilitate handling in installation and transportation.

In one embodiment of the device, an attachment area is dimensioned to receive a mounting device in the form of a so-called T-bolt provided with a threaded screw and a nut fitting the screw. These T-bolts are extraordinarily suitable in the mounting of brackets for cable ladders and cable trays in electrical installations, but also in other installations where mounting is carried out for such a dual profile.

In one embodiment of the device, the T-bolt is provided with a spring means for the press-fitting of the T-bolt into the guide rail. Said spring means considerably facilitate the mounting of T-bolts of the dual profile.

Furthermore, the invention has the advantages of the design being the same for profiles having different spacing dimensions. The profiles can easily be manufactured by roll forming and a subsequent rational joining. Said joining may be effected by either welding, riveting, roll forming, gluing, clinching, etc. The material may be pre-galvanized, which eliminates subsequent surface treatment. The dual profile can be weight-reduced in relation to earlier dual profiles by the fact that the profile part billet can be perforated before the roll forming. This weight reduction also facilitates the handling of the dual profiles in installation as well as in transportation.

In the claims, the term "guide rail" has been used, which should not be considered as limiting, but the term refers to different types of profiles for mounting rails to which different types of support devices may be detachably connected.

### Brief Description of the Drawings

Now, the invention will be described in more detail, reference being made in connection with the accompanying drawing figures.
- Figures 1 a-c: show a conventional guide rail of single design.
- Figures 2a-c: show a conventional guide rail of dual design.
- Figures 3a-c: show a conventional guide rail of an alternative dual design.
- Figures 4a-c: show a conventional guide rail of yet an alternative dual design.
- Figures 5a-e: show a first embodiment of a guide rail of dual design according to the invention.
- Figure 6: shows a second embodiment of a guide rail of dual design according to the invention.
- Figure 7: shows a third embodiment of a guide rail of dual design according to the invention.
- Figure 8a: shows the embodiment according to Figure 6 during use with a mounting device.
- Figure 8b: shows a mounting device for use in a guide rail according to the invention.
- Figures 9a-d: show a manufacturing method of a guide rail according to the invention.

### Description of the Invention

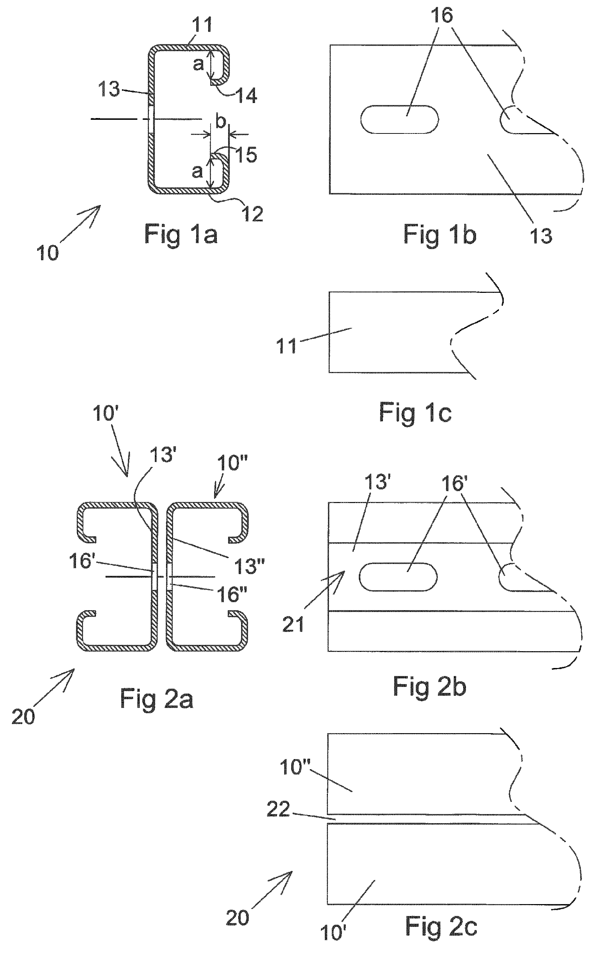

In the following, a number of profile figures 1-5 are shown, the part figures a, b, c of which are shown in first angle projection.

Figure 1 a shows a conventional profile in cross-section of a hanger or guide rail 10 for the mounting of cable ladders, cable trays, or wire trays for electrical cabling or the like. The profile is formed with branches 11, 12 united to a web 13 where the angle between the respective branch and the web is 90°. Each branch is terminated by a gripping edge 14, 15 directed inward toward the profile. These guide ends have on one hand a well-defined perpendicular distance "a" from the respective branch and on the other hand a well-defined length "b" inward toward the web 13 of the profile. Also the length of the web of the profile and the length of the branches are well-defined to afford a suitable fit for the mounting parts, especially T-bolts, that should be attached to the profile. A common dimension of the web of the profile is 48 mm, and a common dimension of the length of the branches is 26 mm. The dimension "a" is usually 13 mm and the dimension "b" is 5-10 mm.

Figure 1b shows a view of the web 13 of the profile from the outside. The web is provided with centrally placed elongate mounting holes 16 oriented in the longitudinal direction of the profile.

Figure 1c shows a view of one branch 11 of the profile from the outside where it is seen that the branch lacks every form of hole.

A profile according to Figures 1 has been produced by roll forming an untreated sheet billet that is hot-dip galvanized after the roll forming or galvanized before the roll forming. The sheet billet is perforated by the fact that the mounting holes are made before the roll forming. The field of application of the profile is as a part of a ceiling-suspended support and wherein fixing of elements against the profile is made using T-bolts or using through screws in the mounting holes.

Figure 2a shows a conventional dual profile 20 in cross-section of a hanger or guide rail. This dual profile is manufactured from two identical single profiles 10', 10", each one according to the embodiment shown in Figure 1a. These two single profiles 10', 10" have been mounted together web 13' to web 13" by a screw joint, not shown, having been applied through the mounting holes 16', 16" of the profiles. Also other joining methods of the single profiles have been used, for instance soldering, welding, or riveting. The material of said profiles is perforated hot-dip galvanized sheet billets, which then are roll-formed and joined. This dual profile has the same field of application as the single profile in Figure 1 a.

Figure 2b shows the dual profile from the side with the mounting holes 16' through the web 13' visible through the profile opening 21.

Figure 2c shows the dual profile 20 from the branch side, the dual profile having a gap 22 between the sub-profiles 10', 10".

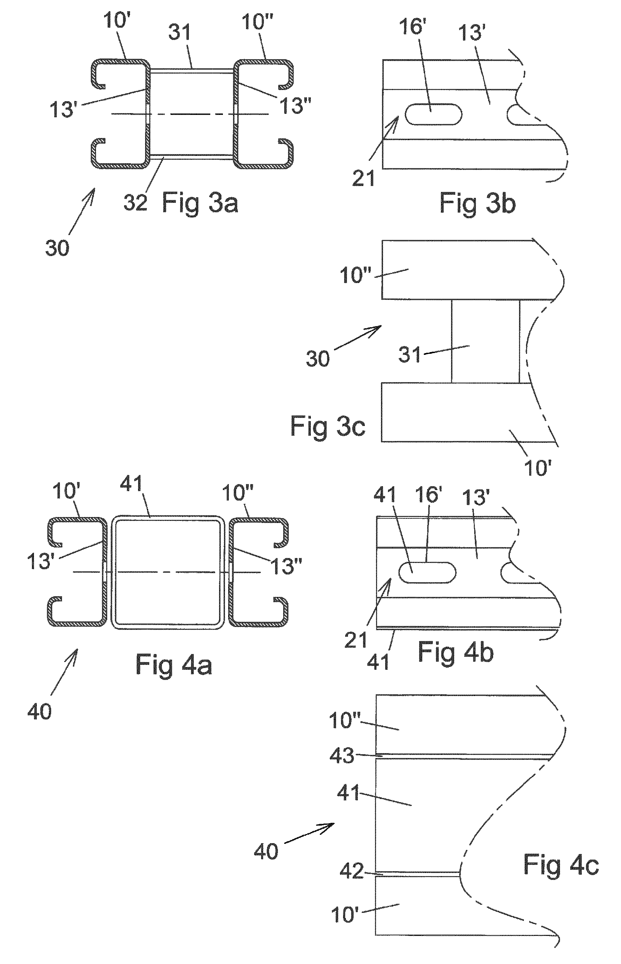

Figure 3a shows an alternative conventional dual profile 30 in cross-section of a hanger or guide rail. Said dual profile is manufactured from two identical single profiles 10', 10", each one according to the embodiment shown in Figure 1 a. These two single profiles 10', 10" have been mounted together by the web 13', 13" of the respective profile having been interconnected using a number of spacing plates 31, 32, which have been welded to the web of the respective single profile to form the dual profile. These spacing plates contribute to a higher moment of inertia and thereby a higher loading capacity of the profile.

Figure 3b shows the dual profile from the side with the mounting holes 16' through the web 13' visible through the profile opening 21.

Figure 3c shows the dual profile 30 from the branch side, the dual profile being formed by spacing plates 31 being welded between the respective webs of the sub-profiles 10', 10".

The material of the profiles and the spacing plates consists of hot-dip galvanized billets. Also this dual profile has the same field of application as the profile in Figures 1 a and 2a, i.e., mounting to the profile may made on one hand by T-bolts and on the other hand by using the mounting holes or a combination of these, since the mounting holes 16' are not appreciably blocked by the spacing plates 31, 32.

Figure 4a shows a further alternative conventional dual profile 40 in cross-section of a hanger or guide rail. This dual profile is manufactured from two identical single profiles 10', 10", each one according to the embodiment shown in Figure 1 a. These two single profiles 10', 10" have been mounted together by the web 13', 13" of the respective profile having been interconnected by means of a closed square profile 41, which has been welded to the web of the respective single profile. The result becomes a dual profile having an even higher moment of inertia and thereby higher loading capacity than the dual profile in Figure 3a.

The material of the single profiles and the square profile consists of hot-dip galvanized billets. This dual profile has the same field of application as the profile in Figures 1a, 2a and 3a, but with the difference that mounting to the profile can made by T-bolts only, since the mounting holes is covered by the square profile.

Figure 4b shows the dual profile from the side with the mounting holes 16' in the web 13' of the profile visible through the profile opening 21 but internally covered by the square profile 41. The square profile has a somewhat wider dimension than the single profiles and is therefore seen slightly outside the same.

Figure 4c shows the dual profile 40 from the branch side of the single profiles 10", 10', the dual profile having gaps 42, 43 between the respective sub-profile 10', 10" and the square profile 41.

The gaps shown in Figures 2c and 4c are the result of the respective parts having been welded to each other.

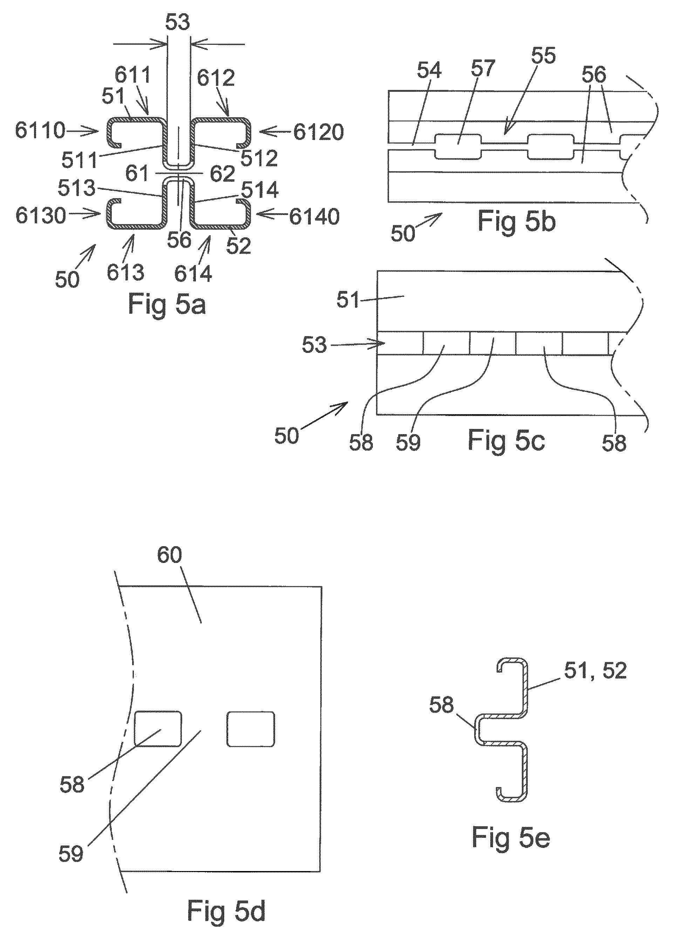

Figure 5a shows a dual profile 50 according to the invention. This dual profile has the same field of application as the previously shown dual profiles but is manufactured from two roll-formed profile halves 51, 52, which have been joined to a complete dual profile by welding, riveting, roll forming, gluing, or clinching. The finished dual profile 50 is provided with a spacing 53 in the form of a distance between the two web parts 511, 512 of one profile half 51 and between the two web parts 513, 514 of the other profile half 52, respectively. This spacing 53 may be varied depending on the requirement of loading capacity of the dual profile. The dual profile 50 forms a dual guide rail comprising a first attachment area 61 and a second attachment area 62, each of which two attachment areas is identically formed but opposed each other. The two attachment areas 61, 62 are formed with a cross-section of C-shape comprising a rear portion 511, 513; 512, 514 formed of said web parts, two side portions 611, 613; 612, 614, each of which is provided with a front portion 6110, 6130; 6120, 6140 having a gripping edge facing the rear portion, and that the two rear portions of the two attachment areas 61, 62 are facing each other as well as that the two rear portions are interconnected by a web 56.

Figure 5b shows the dual profile 50 from the side having a joining gap 54 visible through the profile opening 55 together with the mounting holes 57 formed in the web 56 of the profile parts. In other respects, the single profiles formed by the profile halves are formed with the same dimensions as the previously shown single profiles.

Figure 5c shows the dual profile 50 from the branch side of the formed single profiles, the profile half 51 of the dual profile in the spacing 53 thereof having through holes 58 alternately with material bridges 59 in each profile part.

Figure 5d shows a flat perforated profile part billet 60, which is provided with through holes 58 alternately with the material bridges 59, which both occur in the spacing of the finished dual profile. The profile part billet 60 has been galvanized whereupon it is subjected to a roll forming to form a profile half 51, 52. The length of the profile part billet corresponds to the length of the finished dual profile.

Figure 5e shows the profile half 51, 52 after the profile part billet has been roll-formed into said profile part. The through holes 58 are seen in the figure, which after the joining of two profile halves 51, 52 to each other form the mounting holes in the dual profile.

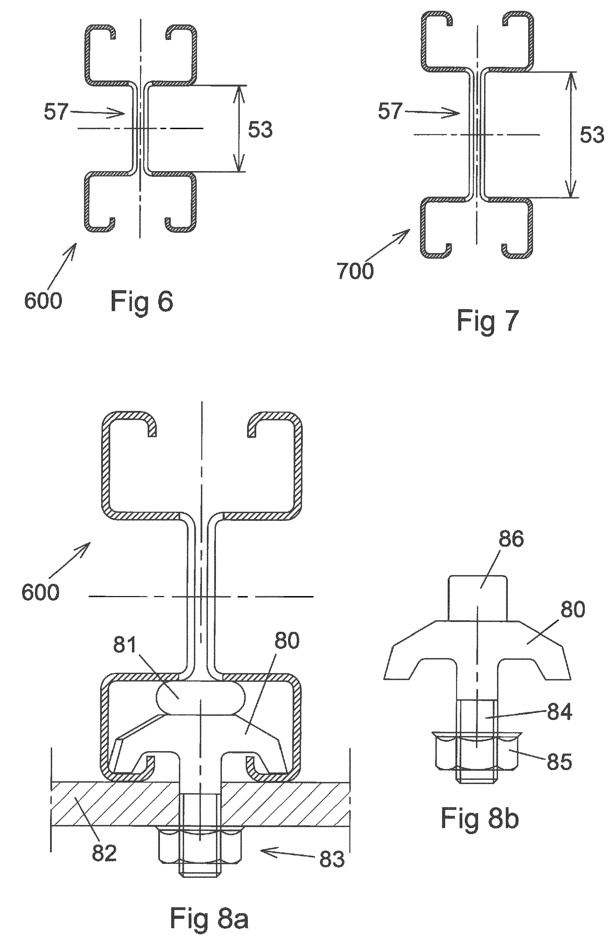

Figure 6 shows an alternative embodiment of the dual profile 600 according to the invention, the spacing 53 of which has increased in relation to the embodiment shown in Figure 5a.

Figure 7 shows yet an alternative embodiment of the dual profile 700 according to the invention, the spacing 53 of which has been further increased in relation to the embodiments shown in Figures 5a and 6.

In the embodiments shown in Figures 5b, 6, and 7, the mounting holes 57 may also be used for the attachment of elements to the dual profile. The mounting holes 57 may also be used for the mounting of the proper dual profile to a beam or the like.

Figure 8a shows the dual profile 600 according to Figure 6 enlarged and provided with a mounting device 80 in the form of a so-called T-bolt. The mounting device is provided with a cushion-shaped spring means 81, which forms a press spacer between the metal part of the mounting device 80 and the bottom of the formed single profile to facilitate placing of the T-bolt in the profile before the mounting of devices 82, such as, for instance, cable ladders, cable trays, or wire trays, by the formed screw/nut joint 83 to the profile.

Figure 8b shows a modified mounting device 80 in the form of a so-called T-bolt having a threaded screw 84 and nut 85. This modified T-bolt is provided with a cubical spring means 86, which has the capability of absorbing a greater play in the profile.

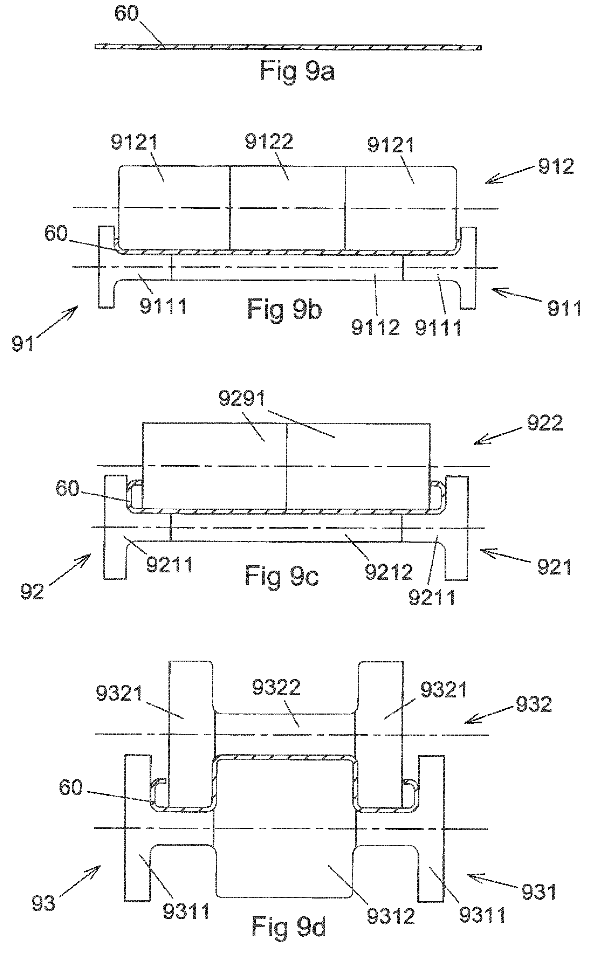

Figure 9a shows a profile part billet 60 that is a surface-treated, for instance galvanized flat steel sheet, which in addition has been perforated according to Figure 5d. The profile part billet is cut into the length that the final profile should have.

In Figure 9b, it is shown that the profile part billet 60 has been fed into a first roll forming portion 91 between a first bottom roller 911 and a first top roller 912. As schematically shown in the figure, the first bottom roller 911 is composed of two end pieces 9111 and an intermediate piece 9112. Correspondingly, the first top roller 912 is composed of two end pieces 9121 and an intermediate piece 9122. This configuration of the rollers implies that it is easy to form profile halves into dual profiles with different dimensions of the spacings of the dual profiles by solely replacing the intermediate pieces 9112, 9122 of the rollers.

Figure 9c shows that the profile part billet 60 after the first bending in the first roll forming portion has been fed in for the next bending in a second roll forming portion 92. This portion consists of a second bottom roller 921 and a second top roller 922. Also these rollers are separable to be adaptable to different dimensions of the spacings of the dual profiles. The bottom roller 921 consists of two end pieces 9211 and an intermediate piece 9212. In this connection, the top roller 922 consists of two roller parts 9221.

Figure 9d shows that the profile part billet 60 after the second bending in the second roll forming portion has been fed in for the final bending in a third roll forming portion 93. This portion consists of a third bottom roller 931 and a third top roller 932. As shown in the figure, also these two rollers separable are so that the parts can be replaced and combined with other parts to adapt the roll forming portion to different dimensions of the spacings of the dual profiles. As schematically shown in the figure, the first bottom roller 931 is composed of two end pieces 9311 and an intermediate piece 9312. Correspondingly, the first top roller 932 is composed of two end pieces 9321 and an intermediate piece 9322.

By this roll forming method, a dual profile having two identically equal profile halves can be manufactured, the dual profile having been given a determined dimension of the spacing thereof. Using the same roll forming equipment, another dual profile can be manufactured with another dimension of the spacing thereof by solely exchanging a roller part to another length in each roller and in each roll forming portion.

In Figures 9b-9d, separable rollers have been indicated, but naturally also non-separable rollers may be used, which then are manufactured for forming a certain type of profile half having a fixed spacing.

## Claims

1. Method for the manufacture of a dual guide rail (50, 600, 700) comprising a first attachment area (61) and a second attachment area (62), each of which two attachment areas is formed with a cross-section of C-shape comprising a rear portion (511, 513; 512, 514), two side portions (611, 613; 612, 614), each of which is provided with a front portion (6110, 6130; 6120, 6140) having a gripping edge facing the rear portion, and that the two rear portions (511, 513; 512, 514) of the two attachment areas are facing each other as well as that the two rear portions (511, 513; 512, 514) are interconnected by a web (56), **characterized by** the following manufacturing steps:
a) a profile billet (60) is roll-formed to comprise the web (56) centrally situated between and integrated with the rear portion (513, 514);
b) by roll forming, there are also created first and second rear portion parts (513, 514), which flank said web (56);
c) by roll forming, the side portions (613, 614) of one side of the two attachment areas (61, 62) are also created fixedly connected to the respective rear portion part (513, 514);
d) by roll forming, the front portion parts (6130, 6140) of one side of the attachment areas (61, 62) are also created;
e) by roll forming, the gripping edges facing inward of one side of the attachment areas (61, 62) are furthermore created;
the profile half (51) formed by said manufacturing steps is joined to a corresponding profile half (52), web to web, into a complete guide rail with the rear portions interconnected by the combined web.

2. Method according to claim 1, **characterized in that** the profile billet (60) has been perforated centrally to form through holes (58) in the web.

3. Method according to any one of claims 1-2, **characterized in that** the roll forming takes place in three roll forming portions (91, 92, 93), each one of which comprises a bottom roller (911, 921, 931) and a top roller (912, 922, 932) between which rollers the profile part billet (60) is roll-formed.

4. Method according to claim 3, **characterized in that** each roller, before the roll forming, is assembled from at least two roller parts to adapt the length of a spacing (53) of the profile part.

5. Dual guide rail (50, 600, 700) comprising a first attachment area (61) and a second attachment area (62), each of which two attachment areas is formed with a cross-section of C-shape comprising a rear portion (511, 513; 512, 514), two side portions (613, 614; 611, 612), each of which is provided with a front portion (6130, 6110; 6140, 6120) having a gripping edge facing the rear portion, and that the two rear portions of the two attachment areas are facing each other, the two rear portions being interconnected by a web (56), **characterized in that** said guide rail consists of a first profile half (51) and a second profile half (52) where each profile half comprises two half rear portions (513, 514), which are interconnected by said web (56).

6. Guide rail according to claim 5, **characterized in that** the first profile half (51) and the second profile half (52) are joined to each other by the respective web (56) being assembled to form a uniform web of the dual guide rail.

7. Guide rail according to claim 6, **characterized in that** the web (56) of each profile half is essentially flat and formed with through holes (58).

8. Guide rail according to any one of claims 5-7, **characterized in that** the attachment area (61, 62) is dimensioned to receive a mounting device (80) in the form of a so-called T-bolt provided with a threaded screw (84) and a nut (85) fitting the screw.

9. Guide rail according to claim 8, **characterized in that** the T-bolt is provided with a spring means (81, 86) for the press-fitting of the T-bolt into the guide rail.

## Patentansprüche

1. Verfahren zur Herstellung einer doppelten Führungsschiene (50, 600, 700), welche einen ersten Befestigungsbereich (61) und einen zweiten Befestigungsbereich (62) aufweist, wobei jeder der beiden Befestigungsbereiche mit einem C-förmigen Querschnitt ausgebildet ist, welcher einen hinteren Abschnitt (511, 513; 512, 514) und zwei Seitenabschnitte (611,613; 612, 614) aufweist, von denen jeder mit einem vorderen Abschnitt (6110, 6130; 6120, 6140) versehen ist, welcher einen dem hinteren Abschnitt zugewandten Greifrand aufweist, und wobei die beiden hinteren Abschnitte (511, 513; 512, 514) der beiden Befestigungsbereiche einander zugewandt sind und wobei die beiden hinteren Abschnitte (511, 513; 512, 514) durch einen Steg (56) miteinander verbunden sind, **gekennzeichnet durch** die folgenden Herstellungsschritte:
a) ein Profilrohling (60) wird rollgeformt, um den Steg (56) aufzuweisen, der zentral zwischen dem hinteren Abschnitt (513, 514) angeordnet und mit diesem integriert ist;
b) **durch** Rollformen werden auch erste und zweite hintere Abschnittsteile (513, 514) gebildet, welche den Steg (56) flankieren;
c) **durch** Rollformen werden auch die Seitenabschnitte (613, 614) von einer Seite der beiden Befestigungsbereiche (61, 62) gebildet, welche fest mit dem jeweiligen hinteren Abschnittsteil (513, 514) verbunden sind;
d) **durch** Rollformen werden auch die vorderen Abschnittsteile (6130, 6140) von einer Seite der Befestigungsbereiche (61, 62) gebildet;
e) **durch** Rollformen werden des Weiteren nach Innen gerichtete Greifränder von einer Seite der Befestigungsbereiche (61, 62) gebildet;
die **durch** die Herstellungsschritte gebildete Profilhälfte (51) wird mit einer entsprechenden Profilhälfte (52) Steg an Steg zu einer vollständigen Führungsschiene verbunden, bei der die hinteren Abschnitte **durch** die kombinierten Stege miteinander verbunden sind.

2. Verfahren nach Anspruch 1, **dadurch gekennzeichnet, dass** der Profilrohling (60) zentral perforiert worden ist, um in dem Steg Durchgangslöcher (58) zu bilden.

3. Verfahren nach einem der Ansprüche 1-2, **dadurch gekennzeichnet, dass** das Rollformen an drei Abschnitten zum Rollformen (91, 92, 93) stattfindet, von denen jeder eine untere Walze (911,921,931) und eine obere Walze (912, 922, 932) aufweist, zwischen welchen Walzen das Profilrohlingsteil (60) rollgeformt wird.

4. Verfahren nach Anspruch 3, **dadurch gekennzeichnet, dass** jede Walze vor dem Rollformen aus mindestens zwei Walzenteilen zusammengesetzt wird, um die Länge eines Zwischenraums (53) des Profilteils anzupassen.

5. Doppelte Führungsschiene (50, 600, 700), aufweisend einen ersten Befestigungsbereich (61) und einen zweiten Befestigungsbereich (62), wobei jeder der beiden Befestigungsbereiche mit einem C-förmigen Querschnitt ausgebildet ist, welcher einen hinteren Abschnitt (511, 513; 512, 514) und zwei Seitenabschnitte (613, 614; 611,612) aufweist, von denen jeder mit einem vorderen Abschnitt (6130, 6110; 6140, 6120) versehen ist, welcher einen dem hinteren Abschnitt zugewandten Greifrand aufweist, und wobei die beiden hinteren Abschnitte der beiden Befestigungsbereiche einander zugewandt sind, wobei die beiden hinteren Abschnitte durch einen Steg (56) miteinander verbunden sind, **dadurch gekennzeichnet, dass** die Führungsschiene aus einer ersten Profilhälfte (51) und einer zweiten Profilhälfte (52) besteht, wo jede Profilhälfte zwei halbe hintere Abschnitte (513, 514) aufweist, welche durch den Steg (56) miteinander verbunden sind.

6. Führungsschiene nach Anspruch 5, **dadurch gekennzeichnet, dass** die erste Profilhälfte (51) und die zweite Profilhälfte (52) über den jeweiligen Steg (56), welche zusammengesetzt werden, um einen einheitlichen Steg der doppelten Führungsschiene zu bilden, miteinander verbunden werden.

7. Führungsschiene nach Anspruch 6, **dadurch gekennzeichnet, dass** der Steg (56) einer jeden Profilhälfte im Wesentlichen flach und mit Durchgangslöchern (58) ausgebildet ist.

8. Führungsschiene nach einem der Ansprüche 5-7, **dadurch gekennzeichnet, dass** der Befestigungsbereich (61, 62) dimensioniert ist, um eine Montagevorrichtung (80) in der Form eines so genannten T-Bolzens aufzunehmen, welcher mit einer Gewindeschraube (84) und einer auf die Schraube passende Mutter (85) versehen ist.

9. Führungsschiene nach Anspruch 8, **dadurch gekennzeichnet, dass** der T-Bolzen mit einem Federmittel (81, 86) zum Einpressen des T-Bolzens in die Führungsschiene versehen ist.

## Revendications

1. Procédé de fabrication d'un double rail de guidage (50, 600, 700) comprenant une première zone de fixation (61) et une deuxième zone de fixation (62), chacune de ces deux zones de fixation étant formée avec une section transversale en forme de C comprenant une portion arrière (511, 513 ; 512, 514), deux portions latérales (611, 613 ; 612, 614), chacune d'entre elles étant pourvue d'une portion avant (6110, 6130 ; 6120, 6140) ayant un bord de préhension face à la portion arrière, et les deux portions arrière (511, 513 ; 512, 514) des deux zones de fixation se faisant face et les deux portions arrière (511, 513 ; 512, 514) étant connectées l'une à l'autre par une membrure (56), **caractérisé par** les étapes de fabrication suivantes :
a) un lopin pour profilé (60) est formé par laminage de manière à comprendre la membrure (56) située centralement entre, et intégrée à, la portion arrière (513, 514) ;
b) par formage par laminage, des première et deuxième parties de portion arrière (513, 514) sont également créées, lesquelles bordent ladite membrure (56) ;
c) par formage par laminage, les portions latérales (613, 614) d'un côté des deux zones de fixation (61, 62) sont également créées, de manière connectée fixement à la partie de portion arrière respective (513, 514) ;
d) par formage par laminage, les parties de portion avant (6130, 6140) d'un côté des zones de fixation (61, 62) sont également créées ;
e) par formage par laminage, les bords de préhension tournés vers l'intérieur d'un côté des zones de fixation (61, 62) sont en outre créés ;
la moitié du profilé (51) formée par lesdites étapes de fabrication étant réunie à une moitié de profilé correspondante (52), membrure contre membrure, pour former un rail de guidage complet avec les portions arrière connectées l'une à l'autre par la membrure combinée.

2. Procédé selon la revendication 1, **caractérisé en ce que** le lopin pour profilé (60) a été perforé centralement pour former des trous traversants (58) dans la membrure.

3. Procédé selon l'une quelconque des revendications 1 à 2, **caractérisé en ce que** le formage par laminage a lieu dans trois portions de formage par laminage (91, 92, 93), chacune d'entre elles comprenant un rouleau inférieur (911, 921, 931) et un rouleau supérieur (912, 922, 932) entre lesquels le lopin pour la partie de profilé (60) est formé par laminage.

4. Procédé selon la revendication 3, **caractérisé en ce que** chaque rouleau, avant le formage par laminage, est assemblé à partir d'au moins deux parties de rouleau pour adapter la longueur d'un espacement (53) de la partie de profilé.

5. Double rail de guidage (50, 600, 700) comprenant une première zone de fixation (61) et une deuxième zone de fixation (62), chacune de ces deux zones de fixation étant formée avec une section transversale en forme de C comprenant une portion arrière (511, 513 ; 512, 514), deux portions latérales (613, 614 ; 611, 612), chacune d'entre elles étant pourvue d'une portion avant (6130, 6110 ; 6140, 6120) ayant un bord de préhension face à la portion arrière, les deux portions arrière des deux zones de fixation se faisant face et les deux portions arrière étant connectées l'une à l'autre par une membrure (56), **caractérisé en ce que** ledit rail de guidage est constitué d'une première moitié de profilé (51) et d'une deuxième moitié de profilé (52), chaque moitié de profilé comprenant deux moitiés de portion arrière (513, 514) qui sont connectées l'une à l'autre par ladite membrure (56).

6. Rail de guidage selon la revendication 5, **caractérisé en ce que** la première moitié de profilé (51) et la deuxième moitié de profilé (52) sont réunies l'une à l'autre par la membrure respective (56), membrures assemblées pour former une membrure uniforme du double rail de guidage.

7. Rail de guidage selon la revendication 6, **caractérisé en ce que** la membrure (56) de chaque moitié de profilé est essentiellement plate et formée avec des trous traversants (58).

8. Rail de guidage selon l'une quelconque des revendications 5 à 7, **caractérisé en ce que** la zone de fixation (61, 62) est dimensionnée de manière à recevoir un dispositif de montage (80) en forme de boulon dit en T pourvu d'une vis filetée (84) et d'un écrou (85) ajustant la vis.

9. Rail de guidage selon la revendication 8, **caractérisé en ce que** le boulon en T est pourvu d'un moyen de ressort (81, 86) pour l'ajustement serré du boulon en T dans le rail de guidage.
